# EUROPEAN PATENT SPECIFICATION

(11) **EP 1 484 771 B1**
(45) Date of publication and mention of the grant of the patent: **19.04.2006**
(21) Application number: 04021112.0
(22) Date of filing: 28.12.2000
(51) Int. Cl.: H01B 1/22, C09D 11/00

(54) **Pressure-sensitive conductive ink composition**
Druckempfindliche leitfähige Tintenzusammensetzung
Composition d'encres conductrices sensibles à la pression

(30) Priority: 28.12.1999 JP 37333099
(43) Date of publication of application: 08.12.2004
(62) Divisional of application: 00311740.5
(73) Proprietor: Nitta Corporation, Osaka-shi, Osaka (JP)
(72) Inventor: Ueda, Tsutomu, Nitta Corporation, Yamatokouriyama-shi Nara (JP); Ooue, Toshikazu, Nitta Corporation, Yamatokouriyama-shi Nara (JP)
(74) Representative: Stuart, Ian Alexander

(56) References cited:
- US-A- 4 765 930
- US-A- 5 250 228
- US-A- 5 773 113

## Description

The present invention relates to a pressure-sensitive conductive ink composition used for pressure-sensitive sensors and the like which measure, for example, pressure and/or its distribution.

A conventional pressure-sensitive conductive ink composition, mixed with an ink binder in which a thermoplastic resin is dissolved by heating in a high-boiling solvent, has been used for pressure-sensitive sensors and the like.

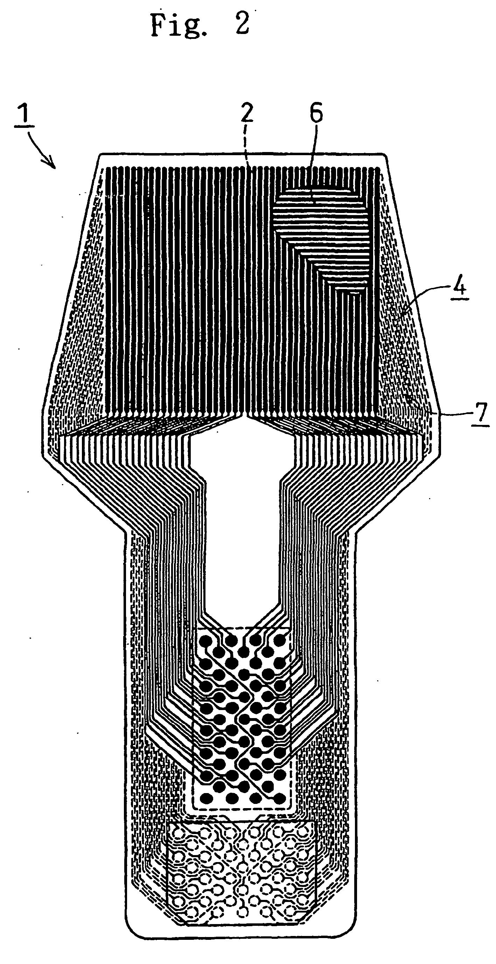

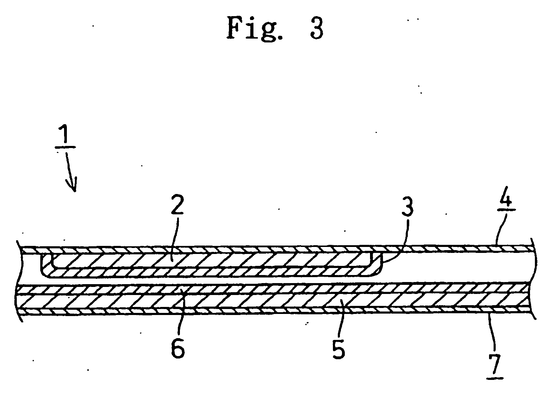

One example of pressure-sensitive sensor 1 is used in a form shown in Figs. 2 and 3. The pressure-sensitive sensor 1 includes, at one side, a sheet substrate 4 on which line electrodes 2 are printed at predetermined intervals and pressure-sensitive conductive ink 3 is applied to surround the line electrodes 2. At the other side, a sheet substrate 7 has row electrodes 5 printed perpendicular to the line electrodes 2. A pressure-sensitive ink 6 is applied to surround the row electrodes 5.
The surfaces of the respective pressure-sensitive conductive ink layers are opposed to each other.

In the conventional pressure-sensitive conductive ink compositions, however, there is the problem with maintaining the desired pressure sensitive characteristics in a high-temperature atmosphere.

It is hence an object of the present invention to provide a pressure-sensitive conductive ink composition capable of maintaining pressure-sensitive characteristics in a high temperature atmosphere.

To achieve the above object, the present invention takes the following technical measures.
(1) The pressure-sensitive conductive ink composition of the present invention includes a thermoplastic resin, a conductive filler, a non-conductive filler, and a curing agent partially crosslinking the resin. The resin is a polyhydroxy ether. The non-conductive filler is ultrafine silicon dioxide having a primary particle diameter of about 7nm.
   In the present invention, the thermoplastic resin is partially crosslinked by the curing agent whereby it is thermoset, so that the glass transition point is improved.
   Since the thermoplastic resin is a polyhydroxy ether, it has ether linkages instead of ester linkages. This gives reduced hydrolyzability, thereby resulting in an improved humidity resistance.
(2) The polyhydroxy ether may have a structure of the following general formula which may be synthesized from bisphenol A and epichlorohydrin. 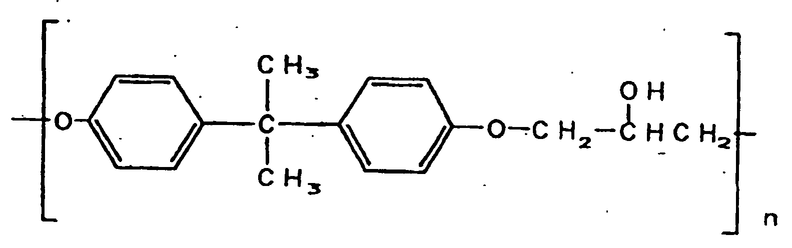
   The range of n is from 1 to 500, preferably from about 50 to about 250, even more preferably from about 80 to about 150.
   This structure gives the composition an advantageous improvement in heat resistance.
(3) The polyhydroxy ether may alternatively have a structure of the following general formula which may be synthesized from tetrabromophenol A and epichlorohydrin. 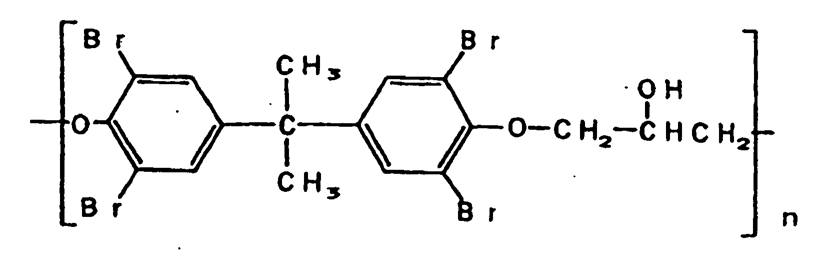
   The range of n is from 1 to 500, preferably from about 50 to about 250, even more preferably from about 80 to about 150.
   This structure advantageously improves heat resistance while maintaining the flexibility and imparts a flame retardancy.
(4) The curing agent may be one or more isocyanates selected from the group consisting of TDI (tolylene diisocyanate), IPDI (isophorone diisocyanate), HDI (hexamethylene diisocyanate) and XDI (xylylene diisocyanate). These curing agents advantageously improve heat resistance.
(5) The curing agent may be one or more polyisocyanates selected from biuret-type, adduct-type and isocyanurate-type isocyanates of TDI (tolylene diisocyanate), IPDI (isophorone diisocyanate), HDI (hexamethylene diisocyanate) and XDI (xylylene diisocyanate). These curing agents improve durability and provide easy handling (in toxicity) at the time of manufacturing.
(6) The curing agent may make use of a blocking agent comprising one or more active hydrogen compounds selected from methyl ethyl ketone, ε -caprolactone, ethyl acetoacetate and phenol. These blocking agents advantageously give a longer pot-life (storage life).
(7) The composition may be blended such that the ratio (NCO/OH) of NCO in the isocyanate curing agent to OH in the polyhydroxy ether may be 0.2 to 2.0. This ratio enables a desired rate of crosslinking reaction.
(8) The conductive filler may be conductive carbon black with a developed structure having an amount of DBP oil absorption of 200 to 480 ml/100g. This enables the composition to obtain stable conductivity.
(9) The pressure-sensitive sensor of the present invention employs the pressure-sensitive conductive ink composition as described above.

Practical examples of the present invention will now be described with reference to the accompanying drawings, in which:
Fig. 1 is a graph showing the temperature stability of the pressure-sensitive characteristics of various samples of the pressure-sensitive sensor of the present invention as compared to a comparative example;
Fig. 2 is a front view of the structure of a pressure-sensitive sensor; and
Fig. 3 is an enlarged cross-sectional view of the structure of line electrodes and pressure-sensitive conductive ink applied around the line electrodes in the pressure-sensitive sensor in Fig. 2.

The pressure-sensitive conductive ink composition of the preferred mode for carrying out the present invention includes a thermoplastic resin and a conductive filler. The thermoplastic resin is added with a curing agent capable of partial crosslinking reaction.

### (Example 1)

Fifty parts by weight of solvent (butyl cellosolve acetate) was added to 21.1 parts by weight of phenoxy resin (PAPHEN-PKHH from Union Carbide Co., Ltd.) having the structure of the general formula below (n is as previously defined), 3.5 parts by weight of carbon black (Furnace Black 3950B from Lion Corporation) and 3.5 parts by weight of silicon dioxide particles (Aerosil R812 from Nippon Aerosil Co., Ltd.). These materials were preliminarily mixed and then sufficiently kneaded in a roll mill.

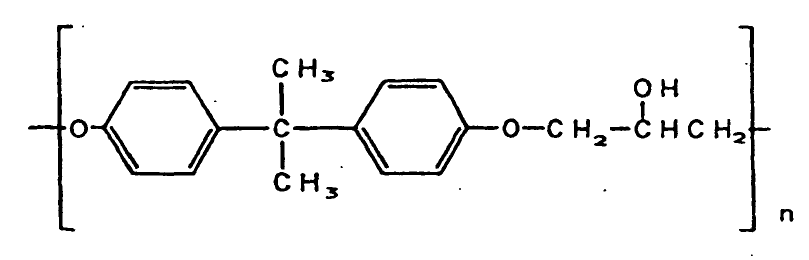

The amount of DBP oil absorbed by the carbon black was 310 ml/100 g, and the primary particle diameter of the silicon dioxide particles was 7 nm.

As a curing agent, 21.9 parts by weight of IPDI (LUXATE ALIPHATIC ISOCYANATE IM from Arco Chemical Co., Ltd.) was added to the kneaded material obtained above, and sufficiently stirred with a stirrer. The resultant kneaded material was applied as print on a polyimide film by a screen printer, preliminarily cured in an oven at 100°C for 4 minutes and further cured firmly at 145°C for 4 minutes to prepare a pressure-sensitive sensor sample.

### (Example 2)

59.4 parts by weight of solvent (butyl cellosolve acetate) was added to 16.9 parts by weight of phenoxy resin (Phenototo YP505 from Toto Kasei Co., Ltd.) having the structure of the general formula below (n is as previously defined), 2.8 parts by weight of carbon black (Furnace Black 39508 from Lion Corporation) and 2.8 parts by weight of silicon dioxide particles (Aerosil R812 from Nippon Aerosil Co., Ltd.). These materials were preliminarily mixed and then fully kneaded in a roll mill.

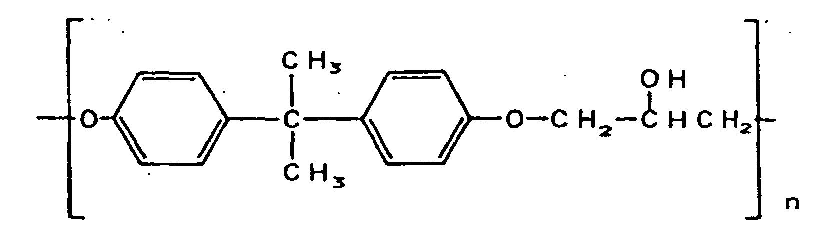

The amount of DBP oil absorbed by the carbon black was 310 ml/100 g, and the primary particle diameter of the silicon dioxide particles was 7 nm.

As a curing agent, 18.1 parts by weight of TDI adduct-type polyisocyanate (CORONATE L-70B from Nippon Polyurethane Industry Co., Ltd.) was added to the kneaded material obtained above, and sufficiently stirred with a stirrer.

A pressure-sensitive sensor sample was prepared by applying the resultant kneaded material as print in the same manner as in Example 1.

### (Example 3)

49.0 parts by weight of solvent (butyl cellosolve acetate) was added to 21.1 parts by weight of phenoxy resin (Phenototo YPB43 from Toto Kasei Co., Ltd.) having the structure of the general formula below (n is as previously defined), 2.8 parts by weight of carbon black (Furnace Black 3950B from Lion Corporation) and 4.3 parts by weight of silicon dioxide particles (Aerosil R812 from Nippon Aerosil Co., Ltd.). These materials were preliminarily mixed and then sufficiently kneaded in a roll mill.

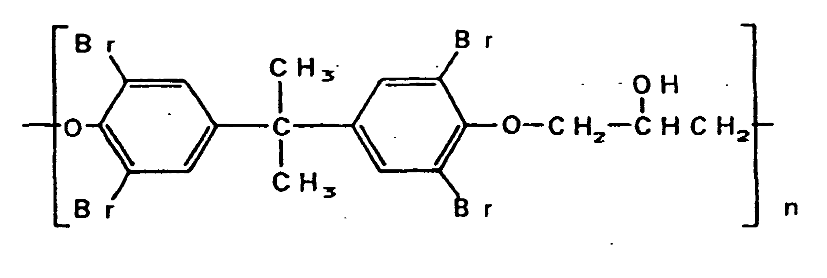

The amount of DBP oil absorbed by the carbon black was 310 ml/100 g, and the primary particle diameter of the silicon dioxide particles was 7 nm.

As a curing agent, 22.9 parts by weight of block-type polyisocyanate (Duranate MF-K60X from Asahi Chemical Industry Co., Ltd.) was added to the kneaded material obtained above, and sufficiently stirred with a stirrer.

A pressure-sensitive sensor sample was prepared by applying the resultant kneaded material as print in the same manner as in Example 1.

### (Comparative Example)

1.4 parts by weight of the same carbon black as in the Examples and 5.6 parts by weight of the same silicon dioxide particles as in the Examples were added to 25 parts by weight of polyester resin (Vylon RV200, Toyobo Co., Ltd.), and then further 68 parts by weight of solvent (a mixed solvent of 2-ethoxyethyl acetate and γ-butyrolactone) were added thereto. These materials were preliminarily mixed and then kneaded in a roll mill to prepare a pressure-sensitive sensor sample in the same manner as in the

### Examples.

### (Evaluation test)

The pressure-sensitive sensor samples were respectively pressurized in a pressuring test machine installed in a thermostatic and humidistatic bath and their pressure-sensitive characteristics were measured. The temperatures were set at 25°C , 45°C , 65°C, 85°C and 95°C, and a pressure of 0.5 kgf/cm² was applied to the samples.

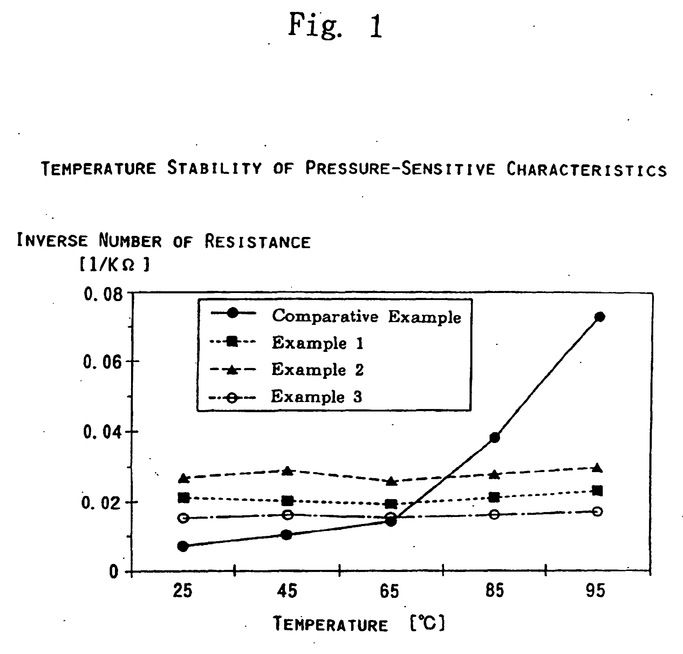

As shown in the graph in Fig. 1, the resistance of each sample in Examples 1 to 3 hardly changed at temperatures of 25 to 95°C, but the resistance of the sample in the Comparative Example dropped rapidly at a temperature of higher than 65 °C.

The humidity resistances of respective sensor samples were evaluated by measuring the pressure-sensitive characteristics thereof (in an atmosphere at 25°C) after letting them stand for 1,000 hours at 85°C in 85 % relative humidity. The samples in Examples 1 to 3 maintained their pressure sensitivity, whereas the sample of the Comparative. Example showed a drop in resistance under no pressure and even pressure is applied back thereto, there is no longer a change in resistance.

Being constituted as stated above, the present invention improves the glass transition point and provides a pressure-sensitive conductive ink composition which is capable of maintaining pressure-sensitive characteristics even in an atmosphere at high temperatures where the conventional one fails.

## Claims

1. A pressure-sensitive conductive ink composition comprising a thermoplastic resin; a conductive filler; a non-conductive filler; and a curing agent partially crosslinking the thermoplastic resin, wherein said thermoplastic resin is a polyhydroxy ether, and said non-conductive filler is ultrafine silicon dioxide having a primary particle diameter of about 7nm.

2. The pressure-sensitive conductive ink composition according to claim 1, wherein said polyhydroxy ether has a structure of the following general formula wherein n is from 1 to about 500.

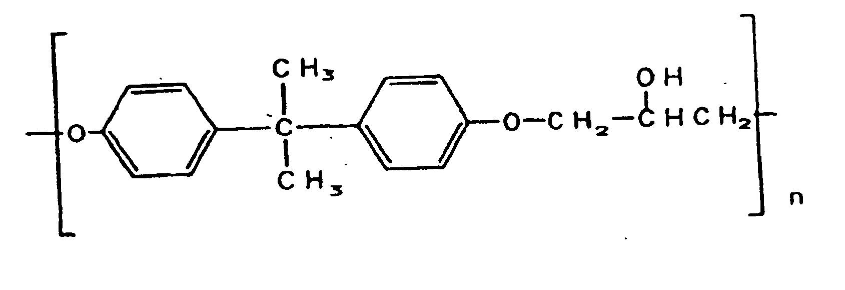

3. The pressure-sensitive conductive ink composition according to claim 1 or claim 2, wherein said curing agent is one or more isocyanates selected from the group consisting of TDI (tolylene diisocyanate), IPDI (isophorone diisocyanate), HDI (hexamethylene diisocyanate) and XDI (xylylene diisocyanate).

4. The pressure-sensitive conductive ink composition according to claim 1 or claim 2 wherein said curing agent is one or more polyisocyanates selected from a biuret type, an adduct type and an isocyanurate type of isocyanates of TDI (tolylene diisocyanate), IPDI (isophorone diddsocyanate), HDI (hexamethylene diisocyanate) and XDI (xylylene diisocyanate).

5. The pressure-sensitive conductive ink composition according to claim 4, wherein said curing agent includes a blocking agent which includes one or more active hydrogen compounds selected from methyl ethyl ketone, ε-caprolactone, ethyl acetoacetate and phenol.

6. The pressure-sensitive conductive ink composition according to any preceding claim, wherein said curing agent is an isocyanate curing agent and an NCO/OH ratio of isocyanate in said curing agent to hydroxy in said polyhydroxy ether is in the range from 0.2 to 2.0.

7. The pressure-sensitive conductive ink composition according to any preceding claim, wherein said conductive filler is conductive carbon black having a developed structure with a DBP oil absorption from 200 to 480 ml/100g.

8. A pressure-sensitive sensor including said pressure-sensitive conductive ink composition according to any one of the preceding claims.

## Revendications

1. Composition d'encre conductrice sensible à la pression comprenant une résine thermoplastique ; une charge conductrice ; une charge non conductrice ; et un agent de durcissement réticulant partiellement la résine thermoplastique, où ladite résine thermoplastique est un polyhydroxy éther, et ladite charge non conductrice est du bioxyde de silicium ultrafin ayant un diamètre de particules primaires d'environ 7 nm.

2. Composition d'encre conductrice sensible à la pression selon la revendication 1, où ledit polyhydroxy éther a une structure de la forme générale qui suit, où n est de 1 à environ 500.

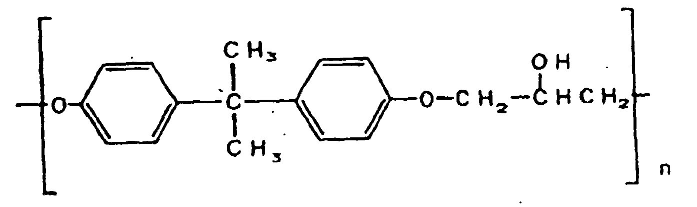

3. Composition d'encre conductrice sensible à la pression selon la revendication 1 ou la revendication 2, où ledit agent de durcissement est un ou plusieurs isocyanates sélectionnés dans le groupe consistant en TDI (tolylène diisocyanate), IPDI (isophorone diisocyanate), HDI (hexaméthylène diisocyanate) et XDI (xylylène diisocyanate).

4. Composition d'encre conductrice sensible à la pression selon la revendication 1 ou la revendication 2, où ledit agent de durcissement est un ou plusieurs polyisocyanates sélectionnés parmi un type de biuret, un type d'addition et un type isocyanurate des isocyanates de TDI (tolylène diisocyanate), IPDI (isophoron e diisocyanate), HDI (hexaméthylène diisocyanate) et XDI (xylylène diisocyanate).

5. Composition d'encre conductrice sensible à la pression selon la revendication 4, où ledit agent de durcissement comprend un agent bloquant qui contient un ou plusieurs composés d'hydrogène actif sélectionnés parmi méthyl éthyl cétone, ε-caprolactone, acétoacétate d'éthyle et phénol.

6. Composition d'encre conductrice sensible à la pression selon toute revendication précédente, où ledit agent de durcissement est un agent d e durcissement d'isocyanate et un rapport NCO/OH de l'isocyanate dans ledit agent de durcissement à l'hydroxy dans ledit polyhydroxy éther et dans la gamme de 0,2 à 2,0.

7. Composition d'encre conductrice sensible à la pression selon toute revendication précédente, où ladite charge conductrice est du noir de carbone conducteur ayant une structure développée avec une absorption d'huile DBP de 200 à 480 ml/100 g.

8. Capteur sensible à la pression comprenant ladite composition d'encre conductrice sensible à la pression selon l'une quelconque des revendications précédentes.

## Patentansprüche

1. Druckempfindliche leitfähige Druckfarbenzusammensetzung, die Folgendes umfasst: ein thermoplastisches Harz, einen leitfähigen Füllstoff, einen nichtleitfähigen Füllstoff und einen Härter, der das thermoplastische Harz teilweise vernetzt, worin das thermoplastische Harz ein Polyhydroxyether und der nichtleitfähige Füllstoff ein ultrafeines Siliciumdioxid ist, das einen Primärteilchendurchmesser von etwa 7 nm aufweist.

2. Druckempfindliche leitfähige Druckfarbenzusammensetzung nach Anspruch 1, worin der Polyhydroxyether eine Struktur der folgenden allgemeinen Formel umfasst: 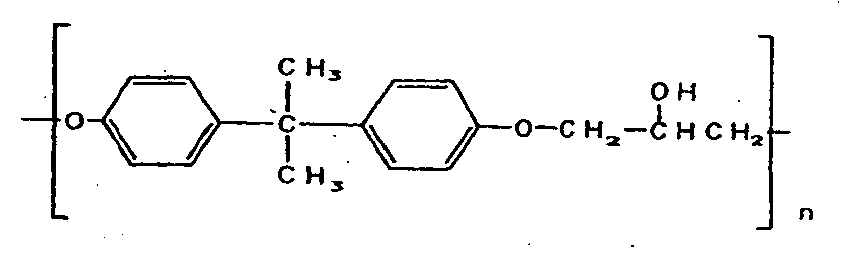 worin n 1 bis etwa 500 ist.

3. Druckempfindliche leitfähige Druckfarbenzusammensetzung nach Anspruch 1 oder Anspruch 2, worin der Härter ein oder mehrere aus TDI (Tolylendiisocyanat), IPDI (Isophorondüsocyanat), HDI (Hexamethylendiisocyanat) und XDI (Xylylendiisocyanat) ausgewählte lsocyanate ist.

4. Druckempfindliche leitfähige Druckfarbenzusammensetzung nach Anspruch 1 oder Anspruch 2, worin der Härter ein oder mehrere aus Isocyanaten von TDI (Tolylendüsocyanat), IPDI (Isophorondiisocyanat), HDI (Hexamethylendiisocyanat) und XDI (Xylylendiisocyanat) vom Biuret-Typ, Addukt-Typ und Isocyanurat-Typ ausgewählte Polyisocyanate ist.

5. Druckempfindliche leitfähige Druckfarbenzusammensetzung nach Anspruch 4, worin der Härter ein Blockiermittel enthält, das eine oder mehrere aus Methylethylketon, ε-Caprolacton, Ethylacetacetat und Phenol ausgewählte aktive Wasserstoffverbindungen umfasst.

6. Druckempfindliche leitfähige Druckfarbenzusammensetzung nach einem der vorangegangenen Ansprüche, worin der Härter ein Isocyanat-Härter ist und das Verhältnis NCO/OH von Isocyanat im Härter zu Hydroxy im Polyhydroxyether im Bereich von 0,2 bis 2,0 liegt.

7. Druckempfindliche leitfähige Druckfarbenzusammensetzung nach einem der vorangegangenen Ansprüche, worin der leitfähige Füllstoff leitfähiger Ruß mit einer entwickelten Struktur mit einer DBP-Ölabsorption von 200 bis 480 ml/100 g ist.

8. Druckempfindlicher Sensor, der die druckempfindliche leitfähige Druckfarbenzusammensetzung nach einem der vorangegangenen Ansprüche umfasst.
